# EUROPEAN PATENT APPLICATION

(11) **EP 3 878 630 A1**
(43) Date of publication of application: **15.09.2021**
(21) Application number: 20162676.9
(22) Date of filing: 12.03.2020
(51) Int. Cl.: B29C 64/106

(54) **METHOD OF MANUFACTURING AN OBJECT AND EXTRUSION-BASED ADDITIVE MANUFACTURING SYSTEM THEREFORE**

(71) Applicant: Nederlandse Organisatie voor toegepast- natuurwetenschappelijk Onderzoek TNO, 2595 DA 's-Gravenhage (NL); Chemelot Scientific Participations B.V., 6167 RD Geleen (NL)
(72) Inventor: GASPERINI, Andrea, 2595 DA 's-Gravenhage (NL)
(74) Representative: V.O.

(57) **Abstract**

The present document relates to a method of manufacturing an object using extrusion-based additive manufacturing, comprising receiving object data of the object to be manufactured and dispensing a build material onto a carrier. Also test position data is received identifying an intended location for including a sensor in the object. During the dispensing, a first fiber is provided extending in a first direction from a peripheral edge of a layer to the test location. Furthermore, a second fiber is provided extending in a second direction from the peripheral edge of the layer to the test location, and the first and the second fiber are provided to overlap at the test location for forming the sensor. In this manner, a highly sensitive fiber sensor is obtained that can be used to localize the extent of response to a load only at a designated point where the two fibers are in contact.

## Description

### Field of the invention

The present invention is directed at a method of manufacturing an object using an extrusion-based additive manufacturing method, the method comprising: receiving object data of the object to be manufactured; and dispensing, using a dispensing head and in accordance with the object data, a build material onto a carrier platform to thereby provide one or more layers of the object to be manufactured, wherein the dispensing head receives via an inlet the build material to be dispensed. The invention is further directed at an extrusion-based additive manufacturing system.

### Background

Some extrusion-based additive manufacturing methods, such as fused filament type additive manufacturing, enable the printing of fiber together with a build material (e.g. a polymer or resin) and thereby enable the manufacturing of fiber reinforced objects. Herein layer-by-layer the object may be manufactured by depositing, through a nozzle, the build material including one or more fibers. Instead of or in addition to their reinforcement capabilities, these fibers may be used for other purposes, e.g. to enable measuring structural integrity characteristics or behavior of the printed object in response to an applied load. These applications for example may apply electrically conductive fibers.

As an example of these methods, continuous carbon fibers have been used as embedded sensing elements in composite parts. In these testing methods, a voltage is applied to the salient ends of the embedded and electrically conductive fibers. An electric current is conveyed through the fibers and the electrical resistance is indicative of e.g. an object's strain in response to stress applied via a load on the object. These methods, however, provide a very low signal to noise (SNR) ratio under tensile and flexural load, which makes their use in real applications challenging. The high noise level and unpredictable signal fluctuations make it difficult to quantitatively model load values from a change in resistance or voltage produced. Furthermore, the location of where the load is applied cannot be derived from these measurements.

### Summary of the invention

It is an object of the present invention to overcome the above disadvantages, and to provide a method of manufacturing objects by additive manufacturing that yields objects of which the structural integrity may be tested through embedded fibers, which provides a good signal-to-noise ratio.

To this end, in accordance with a first aspect there is provided herewith a method of manufacturing an object using an extrusion-based additive manufacturing method, the method comprising: receiving object data of the object to be manufactured; and dispensing, using a dispensing head and in accordance with the object data, a build material onto a carrier platform to thereby provide one or more layers of the object to be manufactured, wherein the dispensing head receives via an inlet the build material to be dispensed; wherein the method comprises: receiving, prior to or during the dispensing, test position data of at least one test location on or in the object to be manufactured, the test location identifying an intended location for including a sensor in the object to be manufactured; and wherein the method comprises, during the dispensing, in at least one layer of the layers, the at least one layer being associated with the at least one test location, the steps of: providing a first fiber extending in a first direction from a peripheral edge of the at least one layer to the test location as designated by the test position data, such that the first fiber ends in the test location; and providing a second fiber extending in a second direction from the peripheral edge of the at least one layer to the test location as designated by the test position data; wherein the first and the second fiber are provided such as to at least partly overlap at the test location, for forming the sensor in the test location.

The extrusion-based additive manufacturing method in accordance with the present invention provides accurate control over the delivery of fibers. The present invention exploits the high precision provided by additive manufacturing with respect to the placement of fibers and the higher freedom in rearrangement of a fiber tip as compared to that of the area along the whole length of the fiber (bulk region). In the manner described above, a fiber type sensor may be achieved which is highly sensitive to strain in response to load in the designated test location. Hence, in this way, given the high sensitivity in one specific point of the fiber path (i.e. in the test location), it is possible to localize the extent of response to an event (i.e. loading) only at the point where the two fibers are in contact with each other.

In production, this enables to preselect one or more test locations where a fiber type sensor as described may be embedded. In these test locations, the build material including fibers is delivered such that a first fiber and a second fiber extend in various directions and overlap in the respective test location. In particular, the first and second fiber are in contact with each other in the overlap area. By doing so, deflection or deformation caused by strain may be measured by applying a load at the test location.

The fiber layout thus consists of at least two distinct fibers which are deposited by continuous fiber three-dimensional (3D) printing, wherein the fibers are physically in touch with each other in the test location. At least one of these fibers ends at the test location, such that strain causes the end of this first fiber to slightly move relative to the second fiber. This specific layout produces a sensing device which is composed of two regions: a sensing area and a wiring area. Indeed, the wiring part (which is a typical continuous fiber segment) is characterized by low resistance and weak piezo restive effect. Therefore, this part is acting as a wire rather than a sensor since it is weakly affected by any change in strain and load. Instead, at the test location, i.e. the fibers' contact point, the DC resistance is particular high but the electrical response (resistance or voltage change) upon receiving a load is extremely high due to the high mobility of the fibers tip due to strain. The resistance of a conductive path through the first and second fiber will be determined by the overlap area, and deformation in response to a load applied at the test location will change the overlap area and thereby the electrical resistance. Therefore, this area will act as the sensing part of the fiber layout and its signal response is much higher than the response originating from the weak piezoelectric effect of the wiring part.

The fibers may extend in various directions, which may or may not be different directions. For example, in accordance with some embodiments, the second direction is opposite to the first direction, and the second fiber ends in the test location. In this case, the first fiber more or less extends into the second fiber via the overlap area. A deformation along this direction will directly affect the overlap area. In some further embodiments, the second direction is under an angle with the first direction, and the second fiber ends in the test location. In these embodiments, the first and second direction may for example be under an oblique or straight angle, dependent on the design. Even a sharp angle may be desired, which may be obtained using a method in accordance with the invention. In other or further embodiments, the second direction is under an angle with the first direction, and the second fiber extends beyond in the test location. In these cases the second fiber may run past the test location, e.g. extending from side to side through the object. The first fiber in the test location connects to the second fiber. This may, amongst others, be useful in order to implement sensors in a fiber reinforced object wherein reinforcement fibers have a certain alignment. The reinforcement fibers may comprise one or more second fibers, whereas the first fibers to the test location extend transverse or under a different angle thereto. The original alignment of the reinforcement fibers is in that case not altered or interrupted at the test location(s). In some of the above embodiments where the first and second embodiments are under an angle, the second direction may be under an angle with the first direction, and wherein the angle is within a range between 0 and π radians with the first direction, such as transverse to the first direction.

In some embodiments, the test position data includes data of a plurality of test locations on or in the object to be manufactured, and the steps of providing the first fiber and the second fiber are performed for each of the test locations. As already mentioned above, an object to be manufactured may comprise multiple test locations. In some of these embodiments, the test locations are located in at least one test volume in the object to be manufactured, and for each one of the at least one test volume, the first fibers extend in a same first direction such as to form a first bundle of first fibers, and the second fibers extend in a same second direction such as to form a second bundle of fibers. In these embodiments, a plurality of fiber connections between first and second fibers are provided in a test volume, e.g. in order to further improve the SNR by combining output signals from these sensors to thereby increase the statistics.

In some embodiments, the extrusion-based additive manufacturing method is a continuous fiber type fused filament type additive manufacturing method, and each of the one or more layers is provided such as to include one or more reinforcement fibers. For example, in certain embodiments, at least one of the first or second fiber is formed by one or more of the reinforcement fibers. Reinforcement fibers already present in the structure of an object may in this embodiment advantageously be used to provide the fibers for creating sensors in accordance with the method of the invention.

In other or further embodiments, the extrusion-based additive manufacturing method is performed in absence of reinforcement fibers, and for printing the first and second fiber, the dispensing head comprises a fiber inlet and is configured for combining fibers in the build material during dispensing. This embodiment may be used to create embedded sensors in an object without reinforcement fibers.

Preferably, in some embodiments, the fibers comprise an electrically conductive material. As also referred to above, the electrical properties such as the electrical resistance of a connection between the first and second fiber have a significant dependency with the overlap area of the fibers. Thus, electrically conductive fibers (or fibers comprising an electrically conductive material) advantageously may be used to provide the first and second fiber in a method in accordance with an embodiment of the invention. In addition, the invention does not exclude other materials, nor is the application of electrically conductive materials an essential feature of the invention. The skilled person may appreciate that, for example, similar to the above an optical resistance of two connected optical fibers that are in contact with each other is also linearly dependent on the overlap area. Therefore, instead of or in addition to using electrically conductive fibers, optical fibers may applied in the method of the invention without departing therefrom. An advantage thereof is that it provides an optical embedded sensor solution that may be easily implemented in an additive manufacturing method, that does not rely on the implementation of intrinsic fiber optic sensors, such as fiber Bragg gratings. Although intrinsic fiber optics may be very accurate in measuring strain, it may be difficult to control accurate positioning of such a sensor type during additive manufacturing. The present method, where optic fibers are applied, provides an alternative sensor solution in applications wherein electrical type sensors cannot be used for certain reasons.

In accordance with a second aspect, there is provided an extrusion-based additive manufacturing system, the system comprising a data input for receiving object data of an object to be manufactured; a carrier platform for supporting the object, and a dispensing head for dispensing, in accordance with the object data, a build material onto the carrier platform to thereby provide one or more layers of the object, wherein the dispensing head comprises a material inlet for receiving the build material, wherein the system further comprises a controller, the controller being configured for receiving, prior to or during the dispensing, test position data of at least one test location on or in the object to be manufactured, the test location identifying an intended location for including a sensor in the object to be manufactured; wherein the dispensing head comprises a fiber inlet for receiving a fiber; wherein at least one of the dispensing head or the carrier platform is configured for moving the dispensing head relative to the carrier platform during the dispensing of the build material, and wherein the controller being arranged for controlling of the dispensing head or the carrier platform such as to perform, during the dispensing, in at least one layer of the layers, the at least one layer being associated with the at least one test location, the steps of: providing a first fiber extending in a first direction from a peripheral edge of the at least one layer to the test location as designated by the test position data, such that the first fiber ends in the test location; and providing a second fiber extending in a second direction from the peripheral edge of the at least one layer to the test location as designated by the test position data; wherein the first and the second fiber are provided such as to at least partly overlap at the test location, for forming the sensor in the test location.

In some embodiments, the above system may further comprise cutting means cooperating with the dispensing head such as to cut the fiber at the test location such as to provide the first fiber and the second fiber. These embodiments enable depositing of the first and second fiber by cutting a fiber at the test location, and by starting deposition of the new fiber immediately upon cutting. For example, in some embodiments, the controller may be configured for controlling at the test location the moving of the dispensing head relative to the carrier platform such that the first and the second fiber at least partly overlap at the test location. The relative motion between the dispensing head and the carrier platform may for example be paused temporarily to enable starting deposition of the second fiber at the test location where the first fiber ended.

In accordance with a third aspect, there is provided an object manufactured using an extrusion-based additive manufacturing method according to the first aspect, wherein the object comprises one or more layers of deposited build material dispensed using a dispensing head, wherein the object includes in at least one layer of the layers and in at least one test location within the layer: a first fiber extending in a first direction from a peripheral edge of the at least one layer to the test location, such that the first fiber ends in the test location; and a second fiber extending in a second direction from the peripheral edge of the at least one layer to the test location; wherein the first and the second fiber at least partly overlap at the test location, for forming a sensor in the test location.

### Brief description of the drawings

The invention will further be elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 schematically illustrates a conventional structural integrity test of a layered printed object;
Figures 2A through 2C schematically illustrate the arrangement of reinforcement fibers in a fiber bundle in a printed object;
Figures 3A and 3B schematically illustrate the forming of a sensor in accordance with an embodiment of the invention;
Figure 4 schematically illustrate an embedded sensor obtained in accordance with an embodiment of the present invention;
Figures 5A through 5C schematically illustrate different embodiments of sensors obtained in accordance with an embodiment of the invention;
Figures 6A and 6B schematically illustrate a top and side view of a sensor obtained in accordance with an embodiment of the invention;
Figures 7A and 7B schematically illustrate a sensor obtained in accordance with an embodiment of the invention;
Figures 8A and 8B schematically illustrate a sensor obtained in accordance with an embodiment of the present invention;
Figure 9 provides a sensor signal graph obtained with a test sensor in accordance with an embodiment of the present invention;
Figure 10 schematically illustrates an extrusion-based additive manufacturing system in accordance with an embodiment of the present invention;
Figure 11 schematically illustrates a method in accordance with an embodiment of the present invention;
Figure 12 schematically illustrates a printed layer of an object obtained with a method in accordance with an embodiment of the invention;
Figure 13 schematically illustrates a sensor in accordance with an embodiment of the present invention.

### Detailed description

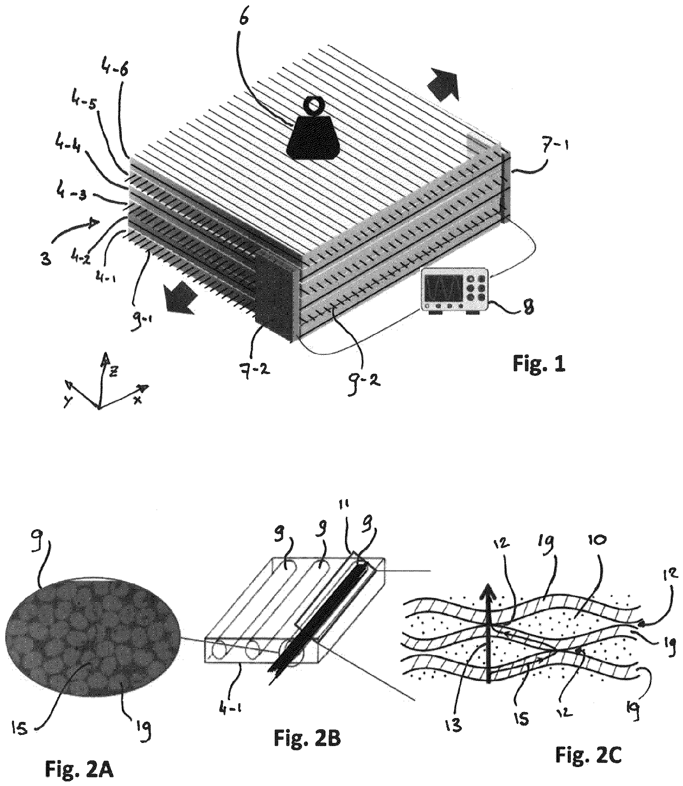

Figure 1 schematically illustrates a conventional method for testing the structural density of a printed fiber reinforced object stack 3. The object stack 3 consists of several layers 4-1 through 4-6. Each of the layers 4-1 through 4-6 is reinforced with aligned fiber bundles 9, of which 9-1 and 9-2 are examples. The fiber bundles 9 in the consecutive layers 4-1 through 4-6 are arranged in a 0/90 alignment orientation configuration. This means that for each two consecutive layers, e.g. layers 4-1 and 4-2, the fiber bundles 9-1 in the first layer 4-1 are oriented parallel to (having a 0° angle (0 radians)) with an x-axis of a coordinate system, whereas the fiber bundles 9-2 in the second layer 4-2 are oriented perpendicular (90° (π/2 radians)) relative to the x-axis of the coordinate system.

To test the integrity of the object stack 3, electrodes 7-1 and 7-2 are brought in contact with the end parts of the fiber bundles on two sides of the object stack 3. The fibers in fiber bundles 9 (9-1 and 9-2) may be of an electrically conductive material. To test the integrity, a voltage may be applied to the electrodes 7-1 and 7-2 and a sensor system 8 may measure the electric current conveyed between the electrodes 7-1 and 7-2. Alternatively, a current may be applied via the electrodes 7-1 and 7-2, and the sensor system 8 may measure the voltage difference. From this, the electrical resistance may be determined. When a load 6 is applied to the object stack 3, the fibers of fiber bundles 9-1 and 9-2 will stretch as a result of strain in response to the applied load 6. The stretching of these fibers causes a relative rearrangement of the individual fibers which will change the electrical resistance. This will be explained with reference to figures 2A through 2C below. Due to the changing electrical resistance, the electrical current measured by sensor system 8 will change responsive to the applied load 6.

Figure 2 provides a transversal cross section of a fiber bundle 9. Schematically, the fiber bundle 9 in object layer 4-1 is illustrated in figure 2B. In the transversal cross section of figure 2A, it can be seen that the fibers 19 of the fiber bundle 9 are arranged side by side in a disorderly manner. Some of the fibers 19 are directly in contact with each other while some of the other adjacent fibers 19 only contact each other via a further neighboring fiber 19. Therefore, if a theoretical current path 15 going from the bottom of bundle 9 to the top of bundle 9 would be drawn, it would not run via a straight line as illustrated in figure 2A. Figure 2C provides a tangential cross section through the fiber bundle 9 (e.g. as illustrated by rectangle 11 in figure 2B). A plurality of fibers 19 that are part of fiber bundle 9 are illustrated in figure 2C. The space in between the fibers 19 may be filled with an additional component of the build material, for example a resin 10 as illustrated in figure 2C. The resin 10 may electrically be non-conductive. The current path 15 is also illustrated in figure 2C.The direction of the current is indicated by the arrow 13. However, to convey in the electrical current via the fibers 19 in the direction indicated by arrow 13, a current path 15 through the fibers 19 is followed due to the fact that the resin 10 is non conductive. The fibers 19 contact each other in several locations 12. If a load 6 is applied to the object stack 3, the fiber bundle 9 will stretch, and the fibers 19 will rearrange due to the stretching caused by strain of the object stack 3. As a result, the different orientation causes the contact points 12 to shift, such as to be at different locations within the fiber bundle 9. The current path 15 indicated in figure 2C will be different, going from contact point to contact point through the fibers 19. Due to the fact that it is not predictable how the fibers 19 will internally rearrange within the fiber bundle 9, also the change in electrical resistance cannot be predicted well. As a result, even though measuring of strain can be performed to some extent using the conventional method, the accuracy of the method is mitigated by this effect.

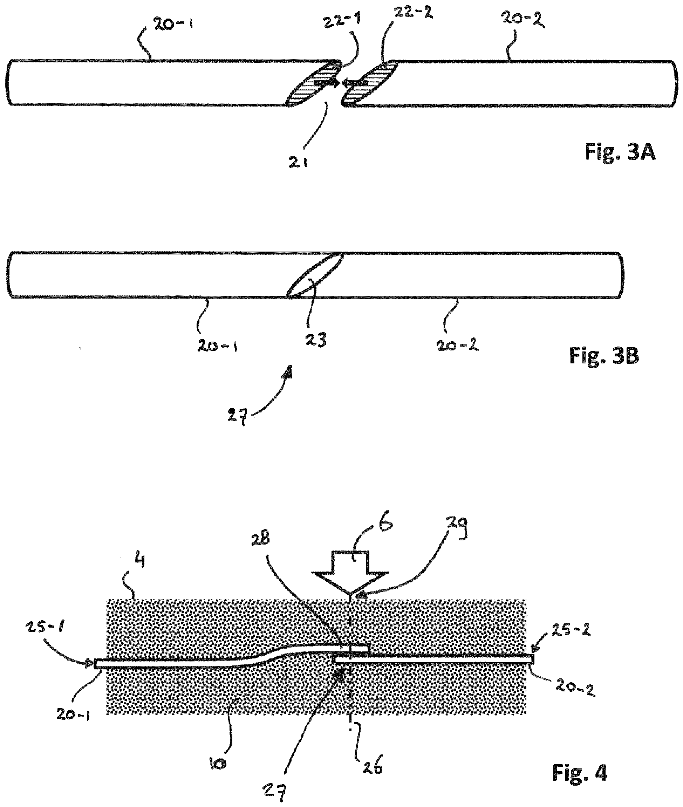

Figures 3A and 3B illustrate a sensor that may be obtained using a method in accordance with the present invention. The sensor is created by cutting a fiber 20 in two sections, thereby forming a first fiber 20-1 and a second fiber 20-2. The cut 21 has created a first fiber end 22-1 and a second fiber end 22-2. In the example illustrated in figures 3A and 3B, an oblique cut has been made in order to increase a total area of overlap. As may be appreciated, preferably the overlap area 23 of the first fiber 20-1 and the second fiber 20-2 must be such that any load induced motion of the first fiber 20-1 relative to the second fiber 20-2 causes a change in the overlap area 23. As a result, the electrical resistance of the overlap area will increase if the overlap area 23 becomes smaller as a result of motion and will decrease when the overlap area 23 will increase in size.

A further embodiment has illustrated in the figure 4. In figure 4, a load 6 is applied to the object stack 3 and the direction of the load is indicated by the dashed line 26. The load 6 is applied at a test location 29. The test location 29, in accordance with the present invention, has been preselected in order to include an embedded sensor 27 at the test location in the object stack 3. The sensor 27 is formed by an overlap area 28 between the first fiber 20-1 and a second fiber 20-2. In the embodiment of figure 4, the first fiber 20-1 extends on top of the second fiber 20-2 being in contact therewith in order to form the overlap area 28. Load 6 exerted as illustrated in figure 4 results in strain, which causes deformation of the object stack 3. The layer 4 will thus deform: for example, when the side faces of layer 4 are fixed, the load 6 exerted at the test location 29 may cause the object to bend downwards resulting in a deformation. As a result, the overlap area 28 between the first fiber 20-1 and second fiber 20-2 may become larger or smaller (dependent on whether the sensor 27 is located below or above the neutral line (not shown) of deformation due to bending). By applying a voltage between the first connecting portion 25-1 and the second connecting portion 25-2, an electric current may be conveyed by the electrically conductive fibers 20-1 and 20-2. The magnitude of the current is dependent on the electrical resistance of the overlap area 28.

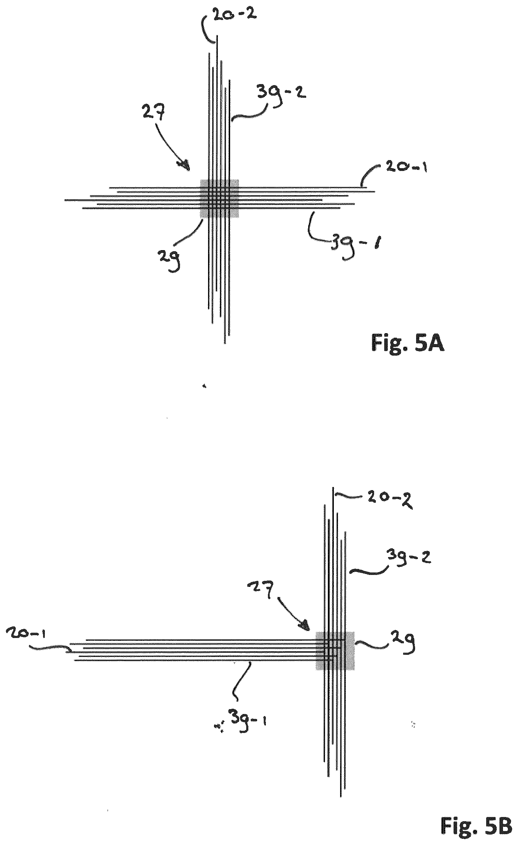

The embodiments illustrated in figures 3A, 3B and 4 are formed by connecting a first fiber 20-1 to a second fiber 20-2 providing an overlap area 28. In addition to these embodiments, in accordance with the present invention, other embodiments may be provided by making connections between a plurality of fibers 20-1 in a first direction and a plurality of second fibers 20-2 in a second direction. For example, in figure 5A a first bundle of fibers 39-1 runs in the horizontal direction, consisting of a plurality of first fibers 20-1. A second bundle of fibers 39-2, consisting of second fibers 20-2 runs in the vertical direction, transverse to the fiber bundle 39-1. At the test location 29, connections between the first fibers 20-1 and the second fibers 20-2 are made by providing contact points between the first fibers 20-1 and second fibers 20-2. These connections are made such that overlap areas are formed between the first fibers 20-1 and the associated second fibers 20-2. For example, one or more cuts or interruptions of the first fibers 20-1 may be made at the test location 29 to provide overlap areas 28 which have a size dependent on an applied load.

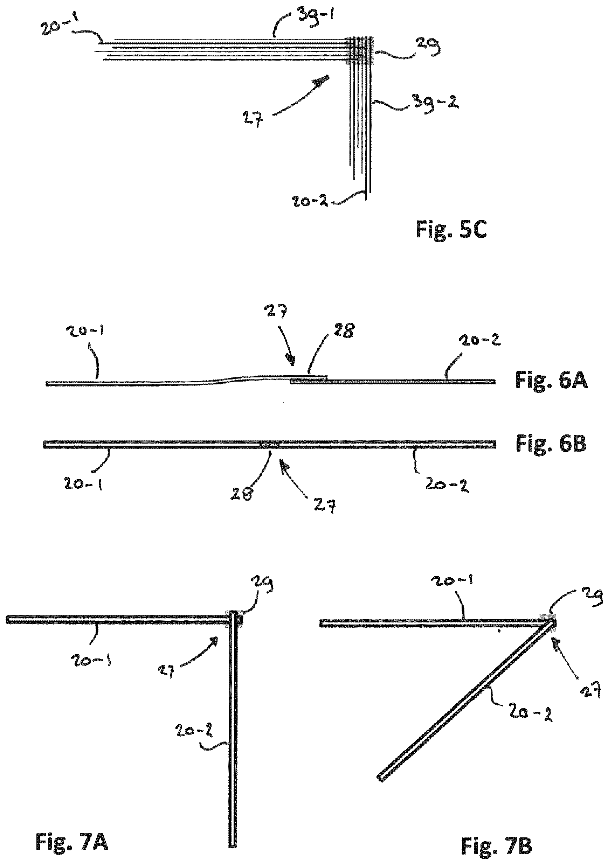

In figure 5B, a further embodiment of a sensor device is illustrated, wherein a plurality of second fibers 20-2 of a second fiber bundle 39-2 at the test location 29 interconnects with the plurality of first fibers 20-1 of a first fiber bundle 39-1. Again, similar to figure 5A, overlap areas 28 are created which have a size that is dependent on an applied load in the test location 29. In a further embodiment illustrated in figure 5C, the second fibers 20-2 of the second fiber bundle 39-2 in the test location 29 are connecting with the first fibers 20-1 of the first fiber bundle 39-1. An L-shaped connection is obtained therewith.

Figures 6A and 6B illustrate a further embodiment of the sensor in accordance with the present invention. In figures 6A and 6B, the sensor 27 obtained is similar to the sensor illustrated in figure 4. The sensor illustrated is similar to the sensor illustrated in figure 4 described above. The first and second fiber 20-1 and 20-2 extend in the overlap area 28 side-by-side and in contact with each other as is illustrated in the top view 6A. Figure 6B illustrates a side view of the sensor 27 in accordance with this embodiment.

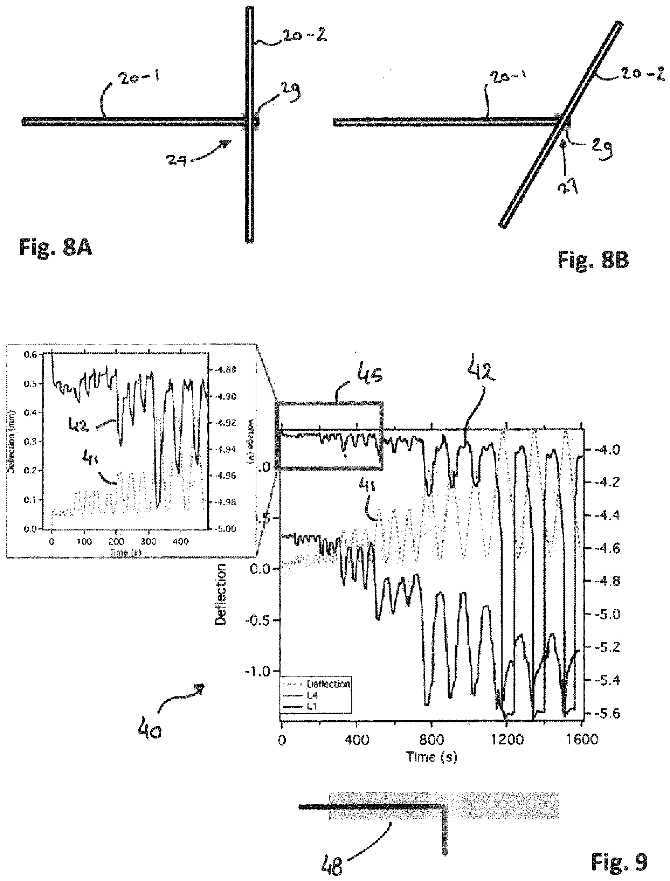

Further embodiments of sensor arrangements are illustrated in figures 7A, 7B, 8A and 8B. In figure 7A, 20-1 and a second fiber 20-2 make a straight angle with respect to each other providing an overlap area in the test location 29. The angle between the first fiber 20-1 and 20-2 may however be different from a straight angle. For example in figure 7B, the first fiber 20-1 and the second fiber 20-2 make a sharp angle in order to end up in the test location 29 where an overlap area is provided. Typically, the design of the object to be manufactured may determine how the first fiber 20-1 and the second fiber 20-2 may best be oriented with respect to each other close to the test location 29. Furthermore, although the present application schematically illustrates the fibers being straight lines, it will be appreciated that the fibers may follow a different path within the object, including for example curves, dents, loops, partial loops, waves, random paths, zigzag patterns, and the like. Advantageously in the field of additive manufacturing, the fibers are arranged in a single object layer 4. However, in more sophisticated methods fibers may be printed such that their paths may traverse several layers to end up at an embedded sensor in one of the layers 4. The present invention is not limited to printing fibers and sensors in a single layer or a straight line.

In figure 8A, a second fiber 20-2 may run continuously from one end of an object to a second end of an object. A first fiber 20-1 is connected to the second fiber 20-2 in the test location 29 and is incoming from a transverse direction. Like in figures 7A and 7B, the embodiments such as the sensor of figure 8A are not limited to a transverse orientation. In figure 8B, the first fiber 20-1 obliquely approaches the second fiber 20-2 such as to provide an overlap area in the test location 29 providing the sensor 27.

Figure 9 provides a sensor signal graph 40 of a sensor signal 42 obtained from a test sensor 48. The test sensor 48 is an L-shape type of sensor, and is illustrated below the graph. The test sensor 48 is deflected by exerting a load, and the deflection of the test sample is indicated by the plotted deflection curve 41 (dotted line) in the graph 40. In the present example, a current source applies a direct current to the sensor of the test sample 48, and the voltage difference across the sensor is determined using a measurement system. The voltage difference is illustrates as the sensor signal 42 in the graph 40. Clearly, the sensor signal closely follows the deflection of the test sample 48. Even very small deflections, illustrated in the enlargement area 45, are measurable from the sensor signal 42. At the left side of the enlargement area, at time t is 0 seconds, the object is deformed three times with a very small load, such as to provide a deflection of approximately 0,02mm (20 micrometer). In the sensor signal 42, three small voltage peaks with a voltage difference of approximately 5 millivolts are visible. The deflections are closely followed by the sensor signal 42, and the voltage differences accurately increase in magnitude with an increasing deflection.

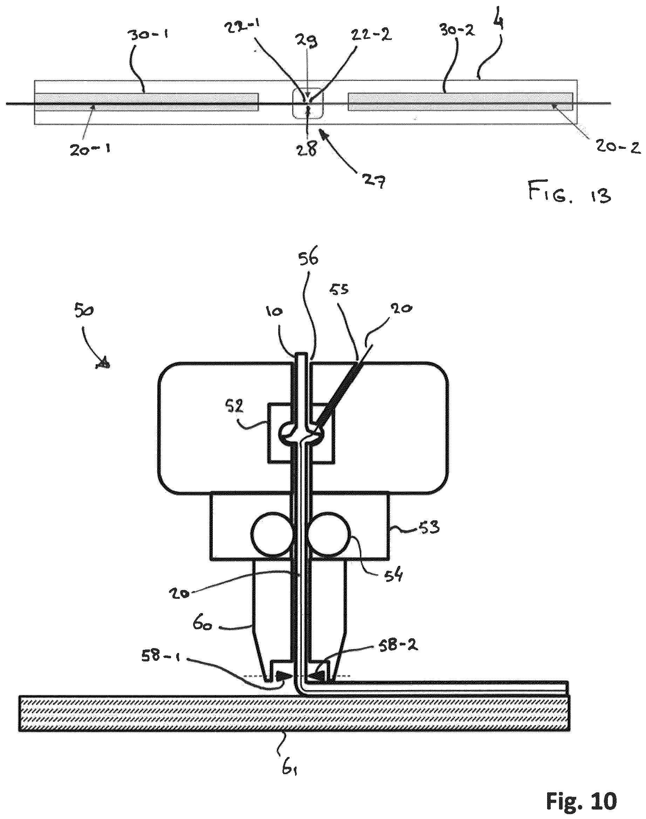

Figure 13 further illustrates an embedded sensor 27 in an object layer 4. The test location 29 includes the overlap area 28 provided by the fiber ends 22-1 and 22-2 making contact with each other. In this part, the electrical resistance is highly sensitive to an exerted load. In the areas 30-1 and 30-2 around the wiring part of the fibers 20-1 and 20-2, the resistivity is largely insensitive to an exerted load. Hereinabove, this has been explained for an electrically conductive fiber 20-1 and 20-2. As may be appreciated, the case for an optical fiber is similar in the sense that the optical resistance of an overlap area is much more responsive to an exerted load than the resistance of the wiring part of a fiber.

Figure 10 schematically illustrates an extrusion-based additive manufacturing system 50 consists of input ports 56 for receiving a resin or other build material component, and input 55 for receiving a fiber 20. The resin 10 is heated in heating chamber 52 and together with the fiber 20 forced through a channel towards the nozzle 60. Actuator system 53 may for example comprise a gear pump 54 for forcing the build material through the nozzle 60. As may be appreciated, a different kind of actuation (e.g. pressure difference) may be applied alternatively. At the end of the nozzle, fiber cutters 58-1 and 58-2 may cooperate to enable cutting of the fiber 20 at a preselected test location 29. For example, a control system (not shown) may receive test location data and may control the movement of the print nozzle 60 relative to the carrier platform 61 on which an object is to be manufactured. When the nozzle 60 reaches the test location 29, the relative motion between the nozzle 60 and the carrier platform 61 may temporarily stop in that location, and the fiber may be cut by cutters 58-1 and 58-2. The new fiber end formed by the remainder of the fiber 20 in the nozzle channel, may be forced out to provide an overlap area with the fiber already on the carrier platform 61. The relative motion between a nozzle 60 and a carrier platform 61 may then continue in order to further manufacture the object.

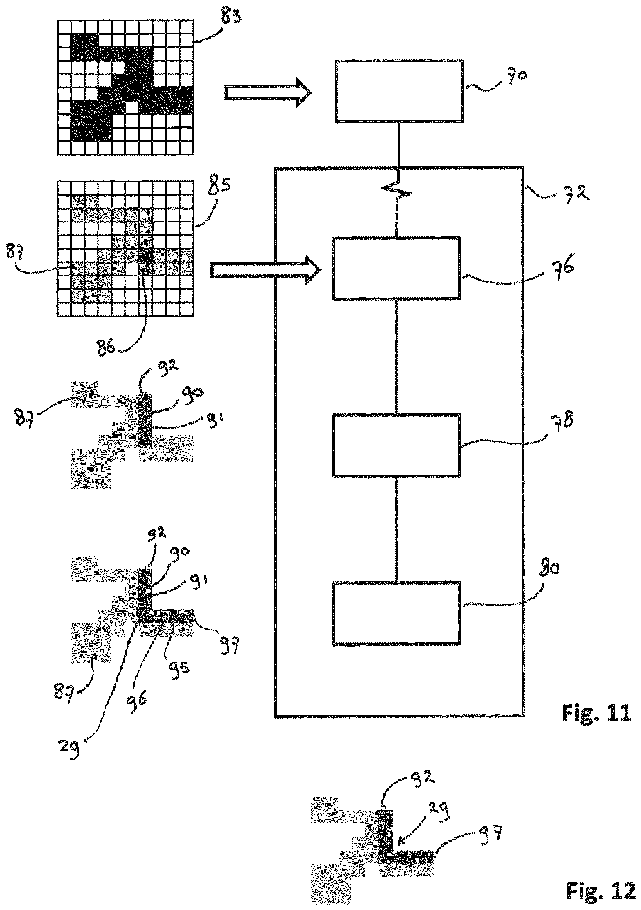

A method in accordance with the present invention is illustrated in figure 11. In the first step 70, object data 83 is received by the additive manufacturing system. The object data 83 may be provided by a matrix of voxels, wherein for each voxel it is indicated whether or not this voxel needs to be printed in order to form the object. In the example of figure 11, the voxels to be printed are illustrated in black, whereas the voxels to be left empty are illustrated in white in the object data 83. In step 72, build material is dispensed onto the carrier platform 61. The method may comprise several method steps which are not all illustrated, and only the method steps of the present invention are illustrated in figure 11. The absence of certain method steps is illustrated by a zigzag line and a dotted part of the line. It may be appreciated that additional steps may be anywhere throughout the method, and also between steps 76 and 78 and steps 78 and 80 or subsequent to step 80. In step 76, test position data 85 is received by a controller of the manufacturing system 50. The test position data 85 is illustrated in figure 11, and indicates from the voxels 87 to be printed, which voxel 86 resembles the test position. In step 78, the first fiber is deposited in the object layer to be printed. As illustrated to the left of step 78 in figure 11, the first build material portion deposited onto the carrier platform (or to the previous object layer) include the first fiber 91. The first fiber 91 slightly extends outside the object voxels 87 to form a first connecting portion such as to enable connection with an electrode. In step 80, the second fiber is provided as illustrated to the left of step 80 in figure 11. The second fiber 96 may be part of the second build material portion 85 deposited in the object voxels. An overlap area, wherein the first fiber 91 and the second fiber 96 are in contact with each other, may be formed in test location 29 that was indicated by voxel 86 in test position data 85. Also the second fiber 96 slightly extends outside the object voxels 87 to be printed in order to form a second connecting portion 97 for connecting with an electrode. Figure 12 schematically illustrates the object layer obtained, including the connecting portions 92 and 97 and the test location 29.

The present invention has been described in terms of some specific embodiments thereof. It will be appreciated that the embodiments shown in the drawings and described herein are intended for illustrated purposes only and are not by any manner or means intended to be restrictive on the invention. It is believed that the operation and construction of the present invention will be apparent from the foregoing description and drawings appended thereto. It will be clear to the skilled person that the invention is not limited to any embodiment herein described and that modifications are possible which should be considered within the scope of the appended claims. Also kinematic inversions are considered inherently disclosed and to be within the scope of the invention. Moreover, any of the components and elements of the various embodiments disclosed may be combined or may be incorporated in other embodiments where considered necessary, desired or preferred, without departing from the scope of the invention as defined in the claims.

In the claims, any reference signs shall not be construed as limiting the claim. The term 'comprising' and 'including' when used in this description or the appended claims should not be construed in an exclusive or exhaustive sense but rather in an inclusive sense. Thus the expression 'comprising' as used herein does not exclude the presence of other elements or steps in addition to those listed in any claim. Furthermore, the words 'a' and 'an' shall not be construed as limited to 'only one', but instead are used to mean 'at least one', and do not exclude a plurality. Features that are not specifically or explicitly described or claimed may be additionally included in the structure of the invention within its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. Additions, deletions, and modifications within the purview of the skilled person may generally be made without departing from the spirit and scope of the invention, as is determined by the claims. The invention may be practiced otherwise then as specifically described herein, and is only limited by the appended claims.

### List of references

- 3: object stack
- 4-1 through 4-6: object layers
- 6: load
- 7-1 and 7-2: electrodes
- 8: sensor system
- 9-1 and 9-2: fiber bundles
- 10: resin
- 11: rectangle indicating tangential plane of figure 2C
- 12: contact locations of fibers
- 13: direction of current
- 15: current path
- 19: fiber
- 20-1: first fiber
- 20-2: second fiber
- 21: cut
- 22-1: first fiber end
- 22-2: second fiber end
- 23: overlap area
- 25-1: first connecting portion
- 25-2: second connecting portion
- 26: load direction
- 27: sensor, embedded in object layer
- 28: overlap area
- 29: test location
- 30-1: area of low resistance / low piezo resistivity of first fiber
- 30-2: area of low resistance / low piezo resistivity of second fiber
- 39-1: first fiber bundle
- 39-2: second fiber bundle
- 40: sensor signal graph
- 41: deflection
- 42: sensor signal
- 45: enlargement area
- 48: L-connected test sample
- 50: extrusion-based additive manufacturing system
- 52: heating chamber
- 53: actuator system
- 54: gear pump
- 58-1 and 58-2: fiber cutters
- 60: print nozzle
- 61: carrier platform
- 70: receive object data
- 72: dispense build material
- 76: receive test position data
- 78: provide first fiber
- 80: provide second fiber
- 83: object data
- 85: test position data
- 86: test position
- 87: object voxels
- 90: first build material portion
- 91: first fiber
- 92: first connecting portion
- 95: second build material portion
- 96: second fiber
- 97: second connecting portion

## Claims

1. Method of manufacturing an object using an extrusion-based additive manufacturing method, the method comprising:
receiving object data of the object to be manufactured; and
dispensing, using a dispensing head and in accordance with the object data, a build material onto a carrier platform to thereby provide one or more layers of the object to be manufactured, wherein the dispensing head receives via an inlet the build material to be dispensed;
wherein the method comprises:
receiving, prior to or during the dispensing, test position data of at least one test location on or in the object to be manufactured, the test location identifying an intended location for including a sensor in the object to be manufactured; and
wherein the method comprises, during the dispensing, in at least one layer of the layers, the at least one layer being associated with the at least one test location, the steps of:
providing a first fiber extending in a first direction from a peripheral edge of the at least one layer to the test location as designated by the test position data, such that the first fiber ends in the test location; and
providing a second fiber extending in a second direction from the peripheral edge of the at least one layer to the test location as designated by the test position data;
wherein the first and the second fiber are provided such as to at least partly overlap at the test location, for forming the sensor in the test location.

2. Method according to claim 1, wherein at least one of:
the second direction is opposite to the first direction, and the second fiber ends in the test location; or
the second direction is under an angle with the first direction, and the second fiber ends in the test location; or
the second direction is under an angle with the first direction, and the second fiber extends beyond in the test location.

3. Method according to claim 2, wherein the second direction is under an angle with the first direction, and wherein the angle is within a range between 0 and π radians with the first direction, such as transverse to the first direction.

4. Method according to any one or more of the preceding claims, wherein the test position data includes data of a plurality of test locations on or in the object to be manufactured, and wherein the steps of providing the first fiber and the second fiber are performed for each of the test locations.

5. Method according to claim 4, wherein the test locations are located in at least one test volume in the object to be manufactured, and
wherein for each of the at least one test volume, the first fibers extend in a same first direction such as to form a first bundle of first fibers, and the second fibers extend in a same second direction such as to form a second bundle of fibers.

6. Method according to any one or more of the preceding claims, wherein the extrusion-based additive manufacturing method is a continuous fiber type fused filament type additive manufacturing method, and wherein each of the one or more layers is provided such as to include one or more reinforcement fibers.

7. Method according to claim 6, wherein at least one of the first or second fiber is formed by one or more of the reinforcement fibers.

8. Method according to any of the claims 1-5, wherein the extrusion-based additive manufacturing method is performed in absence of reinforcement fibers, and
wherein for printing the first and second fiber, the dispensing head comprises a fiber inlet and is configured for combining fibers in the build material during dispensing.

9. Method according to any one or more of the preceding claims, wherein the fibers comprise an electrically conductive material, or wherein the fibers are optical fibers.

10. Extrusion-based additive manufacturing system, the system comprising a data input for receiving object data of an object to be manufactured; a carrier platform for supporting the object, and a dispensing head for dispensing, in accordance with the object data, a build material onto the carrier platform to thereby provide one or more layers of the object, wherein the dispensing head comprises a material inlet for receiving the build material,
wherein the system further comprises a controller, the controller being configured for receiving, prior to or during the dispensing, test position data of at least one test location on or in the object to be manufactured, the test location identifying an intended location for including a sensor in the object to be manufactured;
wherein the dispensing head comprises a fiber inlet for receiving a fiber;
wherein at least one of the dispensing head or the carrier platform is configured for moving the dispensing head relative to the carrier platform during the dispensing of the build material, and wherein the controller being arranged for controlling of the dispensing head or the carrier platform such as to perform, during the dispensing, in at least one layer of the layers, the at least one layer being associated with the at least one test location, the steps of:
providing a first fiber extending in a first direction from a peripheral edge of the at least one layer to the test location as designated by the test position data, such that the first fiber ends in the test location; and
providing a second fiber extending in a second direction from the peripheral edge of the at least one layer to the test location as designated by the test position data;
wherein the first and the second fiber are provided such as to at least partly overlap at the test location, for forming the sensor in the test location.

11. Extrusion-based additive manufacturing system according to claim 10, further comprising cutting means cooperating with the dispensing head such as to cut the fiber at the test location such as to provide the first fiber and the second fiber.

12. Extrusion-based additive manufacturing system according to claim 11, wherein the controller is configured for controlling at the test location the moving of the dispensing head relative to the carrier platform such that the first and the second fiber at least partly overlap at the test location.

13. Extrusion-based additive manufacturing system according to any one or more of claims 10-12, wherein the extrusion-based additive manufacturing system is a continuous fiber type fused filament type additive manufacturing system, and wherein the dispensing head is configured for dispensing each of the one or more layers such as to include one or more reinforcement fibers therein.

14. Object manufactured using an extrusion-based additive manufacturing method according to any of the claims 1-9, wherein the object comprises one or more layers of deposited build material dispensed using a dispensing head, wherein the object includes in at least one layer of the layers and in at least one test location within the layer:
a first fiber extending in a first direction from a peripheral edge of the at least one layer to the test location, such that the first fiber ends in the test location; and
a second fiber extending in a second direction from the peripheral edge of the at least one layer to the test location;
wherein the first and the second fiber at least partly overlap at the test location, for forming a sensor in the test location.

15. Object according to claim 14, wherein at least one of:
the second direction is opposite to the first direction, and the second fiber ends in the test location; or
the second direction is under an angle with the first direction, and the second fiber ends in the test location; or
the second direction is under an angle with the first direction, and the second fiber extends beyond in the test location; or
the first fiber and the second fiber comprise an electrically conductive material; or
the first fiber and the second fiber are optical fibers.
